# EUROPÄISCHE PATENTSCHRIFT

(11) **EP 2 028 797 B1**
(45) Veröffentlichungstag und Bekanntmachung des Hinweises auf die Patenterteilung: **24.02.2010**
(21) Anmeldenummer: 07016558.4
(22) Anmeldetag: 23.08.2007
(51) Int. Cl.: H04L 12/40

(54) **Verfahren zur Datenübertragung**
Data transmission method
Procédé de transmission de données

(43) Veröffentlichungstag der Anmeldung: 25.02.2009
(73) Patentinhaber: SIEMENS AKTIENGESELLSCHAFT, 80333 München (DE)
(72) Erfinder: Klotz, Dieter, Dr., 90768 Fürth (DE); Tretter, Albert, 92712 Pirk (DE)

(56) Entgegenhaltungen:
- EP-A- 1 748 338
- WO-A-2005/034439
- DE-A1- 19 922 497

## Beschreibung

Die Erfindung betrifft ein Verfahren zur Datenübertragung, einen Busteilnehmer für ein serielles Bussystem, ein Netzwerk und ein Computerprogrammprodukt.

Die Automatisierungstechnik befindet sich in einem unvermindert dynamischen Wandel. Der Zwang zu Kostensenkungen, die weitersteigenden Qualitätserwartungen für Prozessabläufe und Produkte sowie die Forderung nach möglichst flexiblen Produktionsmöglichkeiten sind die vom Markt ausgehenden Triebkräfte auf welche die Hersteller von Geräten, Systemen und Anlagen mit hoher Innovationsgeschwindigkeit reagieren.

Von zentraler Bedeutung ist dabei die Weiterentwicklung der Automatisierungstechnik. Feldbusse sind dabei Teil der Schlüsseltechnologie für die Automatisierung. Durch den Einsatz von Feldbussen können in effizienter Weise Daten zu verschiedenen Automatisierungseinrichtungen übertragen werden, um dabei eine Echtzeit- oder nahezu Echtzeitsteuerung dieser Einrichtungen zu ermöglichen.

Um einer hocheffizienten Datenübertragung gerecht zu werden, wurden verschiedene Systembuskonzepte entwickelt, die unter dem Namen "Profibus", "PROFINET", "Interbus", "EtherCAT" kommerziell verfügbar sind. Dabei wurde die Geschwindigkeit des Bussystems u. a. dadurch erhöht, dass statt einer individuellen einzelnen Übertragung von Daten zu einzelnen Busteilnehmern solche Daten in einem so genannten "Summentelegramm" übertragen werden, bei welchem Nutzdaten zu einem Paket zusammengefasst werden um daraufhin zu den einzelnen Busteilnehmern seriell übertragen zu werden. Dabei besteht die Möglichkeit, die Busteilnehmer in einer Ringform anzuordnen, sodass das Summentelegramm vom Master initiiert wie in einem Ring durch alle Module, Baugruppen usw. übertragen wird. Damit bietet sich die Möglichkeit, die Übertragung der Nutzdaten bei einer solchen Linienstruktur zu optimieren.

Beispielsweise offenbart die DE 10 2005 054202 B3 eine Teilnehmervorrichtung eines seriellen Bussystems, ein Bussystem mit einer derartigen Teilnehmervorrichtung sowie eine digitale Eingabe-/Ausgabekarte.

Die DE 199 22 497 A1 offenbart ein Verfahren zur Übertragung von Daten zwischen mindestens zwei Teilnehmern eines Bussystems. Dabei weist jeder Teilnehmer eine Logikeinheit, eine Speichereinheit und eine Schnittstelle auf. Datenfelder werden nach dem Senden einer Startinformation an alle Teilnehmer in der Reihenfolge der aufeinander folgenden Datenfeldpositionen Position für Position abgearbeitet, indem jeder Teilnehmer Daten in die ihm zugeordnete Datenfeldposition bzw. -positionen einschreibt.

Die EP 1748338 A1 offenbart ein ähnliches Verfahren, wobei die Zahl der benötigten Datentelegramme reduziert ist.

Die WO 03/061211 A1 offenbart eine Anlage zum Übertragen von Daten in einem seriellen Bus mit einem Steuergerät, das eine Sende- und Empfangseinheit für zu einem Datenrahmen zusammengefasste Datenfelder aufweist und mit Busteilnehmern, die eine Auswerteschaltung zum Ein- und Auslesen von Datenfeldern im Datenrahmen besitzen.

Ziel der vorliegenden Erfindung ist es, ein verbessertes Verfahren zur Datenübertragung in einem seriellen Bussystem, einen verbesserten Busteilnehmer für ein serielles Bussystem, ein verbessertes Netzwerk und ein verbessertes Computerprogrammprodukt zu schaffen.

Die der Erfindung zugrunde liegenden Aufgaben werden jeweils mit den Merkmalen der unabhängigen Patentansprüche 1, 10, 18 und 19 gelöst. Bevorzugte Ausführungsformen der Erfindung sind in den abhängigen Patentansprüchen angegeben.

Erfindungsgemäß wird ein Verfahren zur Datenübertragung in einem seriellen Bussystem geschaffen. Dabei weist das Bussystem eine Steuereinheit und einen Busteilnehmer auf. Das Verfahren umfasst die Schritte des Empfangens eines ersten Datentelegramms durch einen Busteilnehmer von der Steuereinheit, wobei das Datentelegramm zumindest ein Datenfeld aufweist, wobei in dem Datenfeld Ausgangsdaten enthalten sind. In einem weiteren Schritt erfolgt das Auslesen des für den Busteilnehmer vorgesehenen Datenfeldes aus dem ersten Datentelegramm und das Bereitstellen von Eingangsdaten als Antwort auf das ausgelesene Datenfeld. Nun wird überprüft, ob ein vordefiniertes Kriterium erfüllt ist, wobei bei Erfüllung des Kriteriums ein zweites Datentelegramm neu erzeugt wird und die Eingangsdaten an das zweite Datentelegramm angefügt werden. Bei Nichterfüllung des Kriteriums hingegen werden die Eingangsdaten an ein zuvor von einem weiteren der Busteilnehmer empfangenes Datentelegramm angefügt und damit ein zweites Datentelegramm erzeugt. Schließlich erfolgt das Senden der Eingangsdaten mittels des zweiten Datentelegramms an die Steuereinheit. Ein Busteilnehmer darf als Antwort auf den Empfang des ersten Datentelegramms auch dann Eingangsdaten bereitstellen, wenn im ersten Datentelegramm keine Ausgangsdaten für diesen Teilnehmer enthalten sind.

Das erfindungsgemäße Verfahren zur Datenübertragung hat den Vorteil, dass die Datenübertragung in hocheffizienter Weise gewährleistet ist und dabei trotzdem eine hohe Ausfallsicherheit gegeben ist. Außerdem können Verzögerungen bei der Datenübertragung effektiv vermieden werden. So wird durch das Empfangen des ersten Datentelegramms, welches Datenfelder mit Ausgangsdaten für den Busteilnehmer enthält, eine individuelle Kommunikation zwischen dem Busteilnehmer und der Steuereinheit vermieden: Die Steuereinheit sendet gesammelte Informationen in einem einzigen Datentelegramm seriell zu allen Busteilnehmern, wobei daraufhin jeder Busteilnehmer in der Lage ist, aus dem Datentelegramm die ihm zugedachten Ausgangsdaten der Steuereinheit auszulesen. Dabei überprüft aufgrund der seriellen Anordnung jeder Busteilnehmer für sich, ob entsprechende für ihn bestimmte Datenfelder in dem Datentelegramm enthalten sind. Ist dies der Fall, liest der Busteilnehmer die Datenfelder bzw. das Datenfeld aus. Unabhängig von dem Vorhandensein für Datenfelder für einen einzelnen Busteilnehmer leitet jeder Busteilnehmer ein empfangenes Datentelegramm unmittelbar an den nächsten seriell geschalteten Busteilnehmer weiter, so dass hier nahezu keine Verzögerungen entstehen.

Nachdem nun also der Busteilnehmer die für ihn vorgesehenen Ausgangsdaten empfangen hat, ist er in der Lage, entsprechende Eingangsdaten, z. B. für eine Automatisierungseinrichtung, anzufordern. Sobald diese Eingangsdaten beim Busteilnehmer vorliegen, hat dieser nun zwei Möglichkeiten, wie mit dem Versenden der Eingangsdaten an die Steuereinheit verfahren werden soll. Die Auswahl der beiden Möglichkeiten erfolgt dabei anhand eines vordefinierten Kriteriums. Ist dieses Kriterium erfüllt, wird ein zweites Datentelegramm neu erzeugt und die Eingangsdaten, welche von der Automatisierungseinrichtung abgeholt wurden, werden an das zweite Datentelegramm angefügt und daraufhin an die Steuereinheit gesendet. Ist das Kriterium hingegen nicht erfüllt, wartet das System den Empfang eines Datentelegramms von einem weiteren der Busteilnehmer ab. Dieses Datentelegramm dieses weiteren Busteilnehmers enthält dann zumindest ein Datenfeld mit Eingangsdaten dieses weiteren Busteilnehmers. Der Busteilnehmer ist nun in der Lage, das empfangene Datentelegramm zu erweitern, indem er seine von der Automatisierungseinrichtung abgeholten Eingangsdaten an das bereits bestehende Datentelegramm anfügt. Dadurch wird ein zweites Datentelegramm erzeugt, welches wiederum an die Steuereinheit zurückgesendet werden kann.

Damit ist der wesentliche Unterschied der beiden Möglichkeiten des Zurücksendens von Eingangsdaten an die Steuereinheit jener, dass im ersten Fall bei Erfüllung des Kriteriums der Busteilnehmer unabhängig von anderen Busteilnehmern seine Antwort an die Steuereinheit zurücksendet. Im zweiten Fall hingegen wird in ähnlicher Weise, wie dies für das erste Datentelegramm der Fall war, ein Datenfeld mit entsprechenden Eingangsdaten an ein bereits bestehendes Datentelegramm angefügt, was damit in seiner Größe vergrößert wird. Überträgt man nun diese beiden Möglichkeiten auf eine Vielzahl von Busteilnehmern, so wird klar, dass im ersten Falle eine so genannte Antwortkaskade ausgelöst wird, da jeder Busteilnehmer individuell für sich die jeweiligen am Busteilnehmer vorliegenden Eingangsdaten an die Steuereinheit zurücksendet. Im zweiten Fall hingegen erhält die Steuereinheit lediglich ein umfangreiches Datentelegramm, welches die Eingangsdaten von einer Vielzahl von Busteilnehmern enthält.

Ein großes Datentelegramm, welches eine Antwortkaskade vermeidet, hat den Vorteil, dass das Datenübertragungsaufkommen auf dem seriellen Bus signifikant reduziert wird. Im Gegensatz dazu ist es im ersten Fall möglich, die Übertragung von Eingangsdaten an die Steuereinheit unabhängig von anderen Busteilnehmern zu gewährleisten. Dies wird insbesondere dann relevant, wenn einer der Busteilnehmer zum Abholen von Eingangsdaten von einer Automatisierungseinrichtung eine etwas höhere Antwortzeit hat, was zur Folge haben würde, dass im zweiten Fall durch das Anhängen von Datenfeldern an ein bereits bestehendes Datentelegramm dieses Datentelegramm bei dem etwas langsamer reagierenden Busteilnehmer aufgehalten werden würde, bis dieser Busteilnehmer sein Datenfeld an das besagte Datentelegramm angehängt hat. Dies würde jedoch die Echtzeitfähigkeit des seriellen Bussystems erheblich beeinträchtigen.

Nach einer Ausführungsform der Erfindung handelt es sich bei dem Sendekriterium um eine Verzögerungszeit ab Empfang des ersten Datentelegramms. Nach einer weiteren Ausführungsform der Erfindung handelt es sich bei dem Sendekriterium um die Dringlichkeit der zu sendenden Eingangsdaten. Insbesondere bei der Verwendung des Sendekriteriums in Form einer Verzögerungszeit ab Empfang des ersten Datentelegramms ist es möglich, die Echtzeitfähigkeit des seriellen Bussystems selbst unter schwierigen Bedingungen aufrecht zu erhalten. So ist es z. B. möglich, wenn eine Automatisierungskomponente Eingangsdaten nicht innerhalb einer vorgegebenen Zeitspanne liefert, dass der Busteilnehmer zu einer Erzeugung eines neuen zweiten Datentelegramms konfiguriert wird. Dies hat zur Folge, dass ein Busteilnehmer ein ankommendes Datentelegramm von einem weiteren Busteilnehmer unverändert sofort an den nächsten Busteilnehmer in der seriellen Buskette weiterleitet. Damit wird eine eventuelle Verzögerung durch eine Wartezeit, welche nötig wäre, um die Antwort der Automatisierungskomponente in Form der Lieferung der Eingangsdaten an den Busteilnehmer abzuwarten, vermieden. Liegt jedoch die Antwortzeit der Automatisierungskomponente zur Lieferung der entsprechenden Eingangsdaten unterhalb einer vorgegebenen Zeitkonstante, wird der Busteilnehmer so konfiguriert, dass er zur Effizienzsteigerung die Ankunft eines Datentelegramms von einem weiteren der Busteilnehmer abwartet, um an dieses Datentelegramm ein Datenfeld mit den von der Automatisierungskomponente stammenden Eingangsdaten anzuhängen. Damit wird die Versendung eines individuellen Datentelegramms vermieden, wodurch das Signalaufkommen auf dem seriellen Bus minimiert wird.

Ebenso ist es natürlich möglich, andere Möglichkeiten für Sendekriterien zu wählen. Eine Möglichkeit ist wie bereits oben erwähnt, die Dringlichkeit der zu sendenden Eingangsdaten. So ist es z. B. möglich, dass die Steuereinheit von den Busteilnehmern deren aktuellen Betriebsstatus abfragt. Ist der Betriebsstatus eines Busteilnehmers "in Ordnung", so besteht kein erhöhter Dringlichkeitsbedarf des Sendens dieses Status zur Steuereinheit, da diese standardmäßig eine volle Funktionsfähigkeit der an die Busteilnehmer angeschlossenen Automatisierungseinrichtungen ausgeht. Liegt hingegen an einem der Busteilnehmer eine Information "Fehlfunktion" vor, so besteht hier erhöhter Dringlichkeitsbedarf, diese Information sofort an die Steuereinheit zu senden, um diese daraufhin zu entsprechenden Maßnahmen zu veranlassen. In diesem Fall ist es sinnvoll, dass der Busteilnehmer unabhängig von anderen Busteilnehmern sofort ein entsprechendes Datentelegramm erzeugt, an dieses entsprechende z. B. diagnostische Eingangsdaten anhängt und das somit erzeugte (zweite) Datentelegramm an die Steuereinheit versendet.

Nach einer weiteren Ausführungsform der Erfindung weist jeder der Busteilnehmer eine eindeutige Kennung auf, wobei an das zweite Datentelegramm die Kennung des Busteilnehmers zusammen mit den Eingangsdaten angefügt wird. Dies hat den Vorteil, das an der Steuereinheit ankommende zweite Datentelegramm bezüglich deren Datenfelder eindeutig entsprechenden Busteilnehmern zugeordnet werden können. Da außerdem jedes Datentelegramm einen Kopfteil (Header) zusätzlich zu den Nutzdaten aufweist, ist es möglich, weitere Informationen bezüglich der Verwendung der Nutzdaten (Eingangsdaten) der Steuereinheit mitzuteilen. Beispielsweise ist es möglich, dass in dem Header derselbe Header enthalten ist bzw. demselben Header entspricht, der bereits in dem Datentelegramm mit den Ausgangsdaten enthalten war, das zuvor von dem Busteilnehmer empfangen wurde. Damit ist es möglich, Eingangsdaten von einem Busteilnehmer entsprechend der zuvor an den Busteilnehmer gesendeten Ausgangsdaten zuzuordnen.

Nach einer weiteren Ausführungsform ist es alternativ dazu auch möglich, in einem Initialisierungsprozess den Teilnehmern von der Steuereinheit gesendete Tabellen zukommen zu lassen, welche einem entsprechenden Header einen entsprechenden Datenfeld-Offset und eine zugehörige Länge von Daten, die abgegriffen werden sollen, zuzuordnen. Des Weiteren ist es möglich, einen Ausgabe-Offset individuell einem entsprechenden Header (für einen individuellen Busteilnehmer) zuzuordnen. Dabei ist die folgende Vorgehensweise zur Datenübertragung umsetzbar: Ein Busteilnehmer empfängt ein erstes Datentelegramm und vergleicht den Header des Datentelegramms mit einem Header, der in einer beim Busteilnehmer gespeicherten Tabelle abgelegt ist. Daraufhin liest damit der Busteilnehmer aus der Tabelle einen dem Header zugehörigen entsprechenden Offset und Datenlängenwert aus, um damit auf das erste Datentelegramm zuzugreifen. Aus dem ersten Datentelegramm wird dann an dem Daten-Offset aus der Tabelle eine Anzahl von Datenfeldern oder ein einzelnes Datenfeld mit der durch die Tabelle vorgegebenen Länge ausgelesen.

Dies hat den Vorteil, dass zumindest für die Versendung des ersten Datentelegramms nicht zusätzliche Busteilnehmerkennungen in dem ersten Datentelegramm zusammen mit den Datenfeldern versendet werden müssen, womit das übertragene Datenaufkommen weiter reduziert wird. Außerdem wird aus der Tabelle für den gegebenen Header der Offset, bezogen auf den Beginn des lokalen Ausgangsdatenabbilds des Busteilnehmers, ausgelesen, womit der Busteilnehmer unmittelbar in der Lage ist, direkt aus einem bestimmten lokalen Speicherbereich Eingangsdaten an der gegebenen Position auszulesen.

Zusätzlich ist es möglich, zu einem Header in der Tabelle zugeordnet mehrere Ausgangsdatenabbild-Offsets zu speichern, wobei diese auf den Inhalt der für einen Busteilnehmer vorgesehenen Datenfelder zugeschnitten sind. Damit ist es möglich, einen einzelnen Header individuell mit für Ausgangsdaten spezifizierten Eingabedatenabfragen zu kombinieren. So kann z. B. der Header des ersten Datentelegramms allgemein eine Abfrage von Temperaturwerten einer Automatisierungseinrichtung erwirken, wohingegen zusätzlich in dem Datenfeld für einen Busteilnehmer als Ausgangsdaten ein bestimmter Sensor "Sensor 1" spezifiziert ist. Anstatt dass nun der Busteilnehmer die in dem Datenfeld enthaltene Information in aufwändiger Weise auswertet, liest der Busteilnehmer aus seiner Tabelle über den Header und den für das Datenfeld gegebenen Wert "Sensor 1" lediglich eine Offset-Adresse für seinen Speicher aus, an welchem der "Sensor 1" seine Temperaturinformation abgelegt hat, um daraufhin unmittelbar auf den durch den Offset spezifizierten Speicherbereich zuzugreifen und die entsprechende bereits dort vorliegende (Temperatur-)Information auszulesen. Damit ist diese Information unmittelbar nach Erhalt des ersten Datentelegramms am Busteilnehmer verfügbar.

Das Verfahren mit der Verwendung einer Tabelle mit für Header vordefinierten Offsets, bezogen sowohl auf den Beginn der Ausgangsdaten in einem Datentelegramm, als auch auf den Beginn eines lokalen Ausgangsdatenabbildes in einem Busteilnehmer-Speicher, lässt sich jedoch nicht ohne Weiteres auf zweite Datentelegramme anwenden, welche zurück an die Steuereinheit gesendet werden müssen. Dies ist nur dann möglich, wenn in garantierter Weise ein zweites Datentelegramm Antworten in Form von Datenfeldern vollständig in genau jener Reihenfolge enthält, in welcher zuvor mittels des ersten Datentelegramms die einzelnen Busteilnehmer seriell angesprochen wurden. Sobald aufgrund eines erfüllten Kriteriums bei einem der Busteilnehmer dieser seine Eingangsdaten nicht an das Datentelegramm zur Erzeugung des zweiten Datentelegramms anhängt, fehlt diese Information, so dass eine an der Steuereinheit vorliegende Tabelle mit entsprechenden Offset-Werten einen fehlerhaften Zugriff auf Datenfelder eines Busteilnehmers erzeugt, da in dem Fall die Steuereinheit auf Datenfelder eines Busteilnehmers in dem zweiten Datentelegramm zugreifen will, die dieser Busteilnehmer überhaupt nicht an das zweite Datentelegramm angefügt hat. Aus diesem Grund ist es in dem Fall vorzuziehen, entweder die Vollständigkeit eines zweiten Datentelegramms bezüglich angefügter Datenfelder mit Eingangsdaten aller Busteilnehmer entsprechend zu kennzeichnen, oder wie bereits erwähnt an das zweite Datentelegramm für die Eingangsdaten die jeweilige Kennung des Busteilnehmers hinzuzufügen, wobei in diesem Fall auf eine Tabelle mit Offset-Werten verzichtet wird.

In dem Fall, dass der überwiegende Teil der Busteilnehmer regelmäßig seine Eingangsdaten an ein zuvor von einem weiteren der Busteilnehmer empfangenes Datentelegramm anfügt und dass das einzelne Senden von individuellen Datentelegrammen von den Busteilnehmern zur Steuereinheit eher die Ausnahme ist, bietet es sich an, eine weitere Alternative einzuführen: Voraussetzung dafür ist, dass für das Senden der zweiten Datentelegramme die Tabelle verwendet wird, welche für den Empfang der ersten Datentelegramme wie oben beschrieben vorgesehen ist. Im Falle dessen, dass bei Erfüllung eines der oben genannten Kriterien ein zusätzliches zweites Datentelegramm neu erzeugt wird, werden die Eingangsdaten an das zweite Datentelegramm zusammen mit einer eindeutigen Kennung des Busteilnehmers angefügt. Weitere Busteilnehmer in der seriellen Kette der Busteilnehmer können an dieses zweite Datentelegramm weitere Eingangsdaten anhängen - jedoch unter der Voraussetzung, dass jeweils mit den Eingangsdaten auch die Busteilnehmer-Kennung mit angefügt wird.

Für alle anderen Fälle, wenn ein Busteilnehmer ein Datentelegramm empfängt, welches Eingangsdaten in der Reihenfolge entsprechend der bei der Steuereinheit abgelegten Tabelle aufweist, muss nun allerdings jeder Busteilnehmer im Fall einer Nicht-Verfügbarkeit von entsprechenden Eingangsdaten bzw. in dem Fall wenn die Eingangsdaten bereits zuvor an die Steuereinheit gesendet wurden, an der für ihn vorgesehenen Offsetposition eine entsprechende Länge von Daten mit einer vordefinierten Kennung (z. B. eine Anzahl fortlaufender Nullen) einfügt. Möglich ist auch das wiederholte Einfügen von solchen Daten, die bereits zuvor in einem anderen Datentelegramm an die Steuereinheit gesendet wurden. Dadurch ist für die Steuereinheit eine korrekte Auslesbarkeit und Zuordenbarkeit von Datenfeldern zu Busteilnehmern eindeutig gewährleistet.

Um nun die Effizienz des Verfahrens zur Datenübertragung in einem seriellen Bussystem weiter zu steigern ist es möglich, Unteradressierungen oder Teiladressierungen von Busteilnehmern durchzuführen. So müssen nicht in jedem Nachrichtenzyklus alle Busteilnehmer adressiert werden, sondern es können logische "Subsysteme" gebildet werden, die entsprechend adressiert werden können. Jedem dieser Subsysteme ist dabei ein eindeutiger Identifier zugeordnet, welcher wie bereits zuvor gezeigt, in einer Tabelle für den jeweiligen Busteilnehmer bzw. für die Steuereinheit im Rahmen einer Initialisierungsphase eingeladen werden können. Somit kann bei Subsystemen zusätzlich zur Busteilnehmerkennung auch eine Subsystem-Kennung existieren, mit welcher eindeutig ein Subsystem-Zweig identifiziert werden kann.

Nach einer Ausführungsform der Erfindung umfasst das Verfahren zur Datenübertragung ferner die Schritte des Prüfens der Gesamtgröße des zweiten Datentelegramms und der Eingangsdaten, wobei das Prüfen von Anhängen der Eingangsdaten an das zweite Datentelegramm erfolgt. Ferner umfasst das Verfahren den Schritt des Aufteilens der Eingangsdaten auf das zweite Datentelegramm und/oder zumindest ein weiteres Datentelegramm, wenn die Gesamtgröße des zweiten Datentelegramms und der Eingangsdaten eine vorgegebene Maximalgröße überschreitet.

Damit kann die Größe von Datentelegrammen flexibel an das verwendete Busprotokoll mit entsprechend vorgegebenen maximalen Protokolllängen angepasst werden. Würde somit z. B. das Anhängen von Eingangsdaten an ein bereits existierendes Datentelegramm eine zu große Protokolllänge zur Folge haben, so können entweder die anzuhängenden Eingangsdaten auf das bereits vorhandene Datentelegramm und ein weiteres Datentelegramm aufgeteilt werden, oder aber es kann ein Anhängen der Eingangsdaten auf ein vollständig neues Datentelegramm erfolgen.

Nach einer weiteren Ausführungsform der Erfindung werden an das zweite Datentelegramm zusammen mit den Eingangsdaten Prüfungsdaten angefügt. Im Falle fehlerhafter Prüfungsdaten des von einem der Busteilnehmer empfangenen zweiten Datentelegramms werden nach Anfügen der Eingangsdaten jedoch die Prüfungsdaten des zweiten Datentelegramms bewusst durch den Busteilnehmer verfälscht. Bei den besagten Prüfdaten kann es sich z. B. um eine zyklische Redundanzprüfung (CRC, Cyclic Redundancy Check) handeln. Damit kann verhindert werden, dass ungültige Daten aufgrund von Empfangs- oder Übertragungsfehlern ausgewertet werden. Erkennt ein Busteilnehmer, welcher Eingangsdaten an ein empfangenes Datentelegramm angefügt hat, einen Empfangsfehler (z. B. berechneter CRC der empfangenen Daten ungleich dem empfangenen CRC), darf dieser Busteilnehmer nicht den berechneten CRC verwenden, sondern er muss einen bewusst "verfälschten" CRC senden. An diesem verfälschten CRC erkennen die weiteren Empfänger des Telegramms ebenfalls den Empfangsfehler.

Nach einer weiteren Ausführungsform der Erfindung unterscheidet sich die Ausgaberichtung der mittels des zweiten Datentelegramms gesendeten Eingangsdaten von der Eingaberichtung des ersten Datentelegramms. Dies hat den Vorteil, dass ein rein serieller Betrieb des Bussystems ohne die Notwendigkeit einer ringförmigen Anordnung der Busteilnehmer gewährleistet ist. An dieser Stelle sei angemerkt, dass ein letzter Busteilnehmer in der seriellen Kette von Busteilnehmern in spezieller Weise konfiguriert sein muss, da dieser aufgrund der vorgegebenen Ausgaberichtung der zweiten Datentelegramme natürlich nie Eingangsdaten von einem nachfolgenden Busteilnehmer empfangen wird. Hier ist es möglich, in einer Initialisierungsphase dem letzten Busteilnehmer einer seriellen Kette von Busteilnehmern mitzuteilen, dass dieser grundsätzlich ein neues zweites Datentelegramm erzeugt und dieses an entsprechende vor geordnete Busteilnehmer des Bussystems sendet. Alternativ dazu können die Teilnehmer so konfiguriert sein, dass der jeweils letzte Teilnehmer automatisch erkennt, dass nach ihm kein weiterer Teilnehmer mehr folgt und er damit als Initiator für die Eingangsrichtung arbeitet.

Nach einer Ausführungsform der Erfindung umfasst das Verfahren ferner den Schritt des Lesens einer beim Busteilnehmer gespeicherten Offset-Information, wobei die Offset-Information die Position des für den Busteilnehmer vorgesehenen Datenfeldes in dem ersten Datentelegramm, wie bereits oben angesprochen, angibt.

In einem weiteren Aspekt betrifft die Erfindung einen Busteilnehmer für ein serielles Bussystem, wobei das Bussystem eine Steuereinheit aufweist mit Mitteln zum Empfangen eines ersten Datentelegramms durch den Busteilnehmer von der Steuereinheit, wobei das Datentelegramm zumindest ein Datenfeld aufweist, wobei in dem Datenfeld Ausgangsdaten enthalten sind. Ferner weist der Busteilnehmer Mittel zum Auslesen des für den Busteilnehmer vorgesehenen Datenfeldes aus dem ersten Datentelegramm und Mittel zum Bereitstellen von Eingangsdaten als Antwort auf das ausgelesene Datenfeld auf. Der Busteilnehmer umfasst ferner Mittel zum Erzeugen eines neuen Datentelegramms, Mitteln zum Einfügen der Eingangsdaten an ein Datentelegramm und Mittel zum Überprüfen, ob ein vordefiniertes Kriterium erfüllt ist. Ist ein solch vordefiniertes Kriterium erfüllt, wird ein zweites Datentelegramm neu erzeugt und die Eingangsdaten werden an das zweite Datentelegramm angefügt. Ist das Kriterium nicht erfüllt, werden die Eingangsdaten an ein zuvor von einem weiteren Busteilnehmer empfangenes Datentelegramm angefügt und damit ein zweites Datentelegramm erzeugt. Ferner umfasst der Busteilnehmer Mittel zum Senden der Eingangsdaten mittels des zweiten Datentelegramms an die Steuereinheit.

Nach einer weiteren Ausführungsform der Erfindung umfasst der Busteilnehmer Mittel zum Prüfen der Gesamtgröße des zweiten Datentelegramms und der Eingangsdaten, wobei das Prüfen vor Anhängen der Eingangsdaten an das zweite Datentelegramm erfolgt und Mittel zum Aufteilen der Eingangsdaten auf das zweite Datentelegramm und/oder zumindest ein weiteres Datentelegramm, wenn die Gesamtgröße des zweiten Datentelegramms und der Eingangsdaten eine vorgegebene Maximalgröße überschreitet.

Nach einer Ausführungsform der Erfindung umfasst der Busteilnehmer ferner Mittel zum Bestimmen von Prüfungsdaten und Anfügen der Prüfungsdaten zusammen mit den Eingangsdaten an das zweite Datentelegramm.

Nach einer Ausführungsform der Erfindung umfasst der Busteilnehmer ferner Mittel zum Lesen einer beim Busteilnehmer gespeicherten Offset-Information, wobei die Offset-Information die Position des für den Busteilnehmer vorgesehenen Datenfeldes in dem ersten Datentelegramm angibt.

Nach einer Ausführungsform der Erfindung umfasst der Busteilnehmer ferner Mittel zum Empfangen der Offset-Information von der Steuereinheit. Dies kann wie gesagt während einer Initialisierungsphase stattfinden, in welcher die Steuereinheit mit den Busteilnehmern synchronisiert wird.

In einem weiteren Aspekt betrifft die Erfindung ein serielles Bussystem, wobei das Bussystem eine Steuereinheit und zumindest einen erfindungsgemäßen Busteilnehmer umfasst.

Nach einer weiteren Ausführungsform der Erfindung umfasst das Netzwerk ferner ein Verteilermodul, wobei das Verteilermodul zum Anschluss mehrerer Busteilnehmer ausgebildet ist, wobei das Verteilermodul zum Verteilen von Datentelegrammen an die angeschlossenen Busteilnehmer ausgebildet ist. Dabei ist das Verteilermodul vorzugsweise so ausgebildet, dass von den Busteilnehmern empfangene Datentelegramme ausschließlich an die Steuereinheit weitergeleitet werden, wenn die Datentelegramme für die Steuereinheit bestimmt sind. Dies ist deshalb relevant, dass die Flussrichtung von zweiten Datentelegrammen stets in Richtung von den Busteilnehmern auf dem kürzesten Weg zur Steuereinheit beibehalten wird. Damit ist gewährleistet, dass von einem beliebigen Busteilnehmer an die Steuereinheit gesendete zweite Datentelegramme nicht aufgrund einer fehlerhaften Verteilung bei einem am Verteilermodul angeschlossenen weiteren Busteilnehmer empfangen werden, woraufhin sich dieser Busteilnehmer veranlasst sehen würde, das empfangene Datentelegramm mit (eventuell weiter angefügten Eingangsdaten) in die Richtung entgegengesetzt zur Empfangsrichtung weiter an einen weiteren Busteilnehmer zu senden. Damit würde das entsprechende Datentelegramm in entgegen gesetzter Richtung zur Steuereinheit von Busteilnehmer zu Busteilnehmer weitergeschickt werden, ohne jemals an der Steuereinheit empfangen zu werden.

Dadurch, dass durch das Verteilermodul von den Busteilnehmern empfangene Datentelegramme ausschließlich an die Steuereinheit weitergeleitet werden, wenn die Datentelegramme auch für die Steuereinheit bestimmt sind, ist es möglich, eine Vielzahl von Busteilnehmern an einem solchen Verteilermodul anzuschließen. Beispielsweise ist es möglich, eine Stern-Topologie aufzubauen, was eine flexible Vernetzung von Busteilnehmern ermöglicht.

In einem weiteren Aspekt betrifft die Erfindung ein Computerprogrammprodukt mit von einem Computer ausführbaren Instruktionen zur Durchführung des erfindungsgemäßen Verfahrens zur Datenübertragung in einem seriellen Bussystem.

Im Folgenden werden bevorzugte Ausführungsformen der Erfindung näher erläutert. Es zeigen:
- FIG 1: ein Blockdiagramm eines erfindungsgemäßen Netzwerks;
- FIG 2: ein Flussdiagramm eines erfindungsgemäßen Verfahrens zur Datenübertragung;
- FIG 3: ein Flussdiagramm eines erfindungsgemäßen Verfahrens zur Datenübertragung;
- FIG 4: ein weiteres Flussdiagramm eines erfindungsgemäßen Verfahrens zur Datenübertragung.

Im Folgenden sind ähnliche Elemente mit gleichen Bezugszeichen gekennzeichnet.

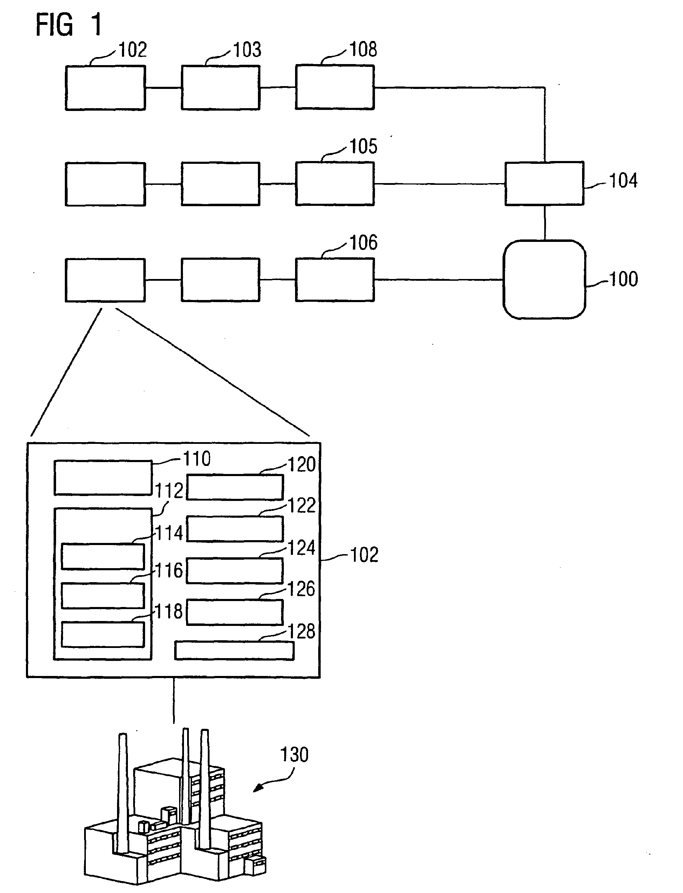

Die FIG 1 zeigt ein Blockdiagramm eines erfindungsgemäßen Netzwerks. Das Netzwerk umfasst eine Steuereinheit 100, an welche eine Vielzahl von Busteilnehmern angeschlossen ist. Ein Teil dieser Busteilnehmer ist dabei als Busteilnehmer 106 direkt an die Steuereinheit 100 angeschlossen, wohingegen andere Busteilnehmer 102, 103, 108 und 105 über ein Verteilermodul 104 an der Steuereinheit 100 angeschlossen sind. Das Verteilermodul 104 ist dabei so ausgebildet, dass es eine Tabelle beinhaltet, welches einem physikalischen Ausgang (Port) des Verteilermoduls die Liste von Kennungen der dort jeweils angeschlossenen Busteilnehmer zuordnet. Damit ist es möglich, Gruppen von Busteilnehmern mit bestimmten "Subsystem" Kennungen zu bilden, so dass für eine Gruppe von Busteilnehmern (z. B. Gruppe mit Busteilnehmern 102, 103 und 108) bestimmte Datentelegramme ausschließlich an diese besagten Busteilnehmer gesendet werden und nicht beispielsweise an die Busteilnehmer, welche sich in der Kette befinden mit dem Busteilnehmer 105.

In der FIG 1 ist exemplarisch der Aufbau eines Busteilnehmers 102 gezeigt. Der Busteilnehmer 102 enthält unter anderem einen Prozessor 110 und einen Speicher 112 mit verschiedenen Modulen 114, 116 und 118. Ferner weist der Busteilnehmer 102 eine Empfangseinheit 120 zum Empfangen von Datentelegrammen auf. Die Ausleseeinheit 122 des Busteilnehmers 102 dient zum Auslesen von Datenfeldern aus einem empfangenen Datentelegramm. Die Sendeeinheit 124 des Busteilnehmers 102 dient zum Übertragen von Datentelegrammen mit entsprechenden Eingangsdaten an weitere Busteilnehmer bzw. an die Steuereinheit 100. Die Telegrammerzeugungseinheit 126 ist dabei Voraussetzung zur Erzeugung eines neuen Telegramms bzw. zum Anhängen von Eingangsdaten an ein bestehendes Datentelegramm, welches zuvor von einem weiteren Busteilnehmer empfangen wurde.

Bei den Modulen 114 bis 118 handelt es sich beispielsweise um Module, die zur Überprüfung der Erfüllung eines Kriteriums dienen, anhand dessen entweder ein zweites Datentelegramm neu erzeugt wird oder anhand dessen ein von einem weiteren Busteilnehmer empfangenes Datentelegramm durch Anfügen weiterer Eingangsdaten erweitert wird. Die Module enthalten weiter eine Komponente zum Prüfen der Gesamtgröße des zweiten Datentelegramms und der Eingangsdaten mit der Möglichkeit zum Aufteilen von Eingangsdaten auf das zweite Datentelegramm und/oder zumindest ein weiteres Datentelegramm, wenn die Gesamtgröße des zweiten Datentelegramms und der Eingangsdaten eine vorgegebene Maximalgröße überschreitet. Des Weiteren dient eines der Module zur Erzeugung von Prüfungsdaten (z.B. eines CRC), um somit Empfangs- oder Sendefehler aufzudecken. Der Busteilnehmer 102 weist ferner ein Interface 128 auf, welches zur Anbindung des Busteilnehmers 102 an eine Automatisierungskomponente 130 dient.

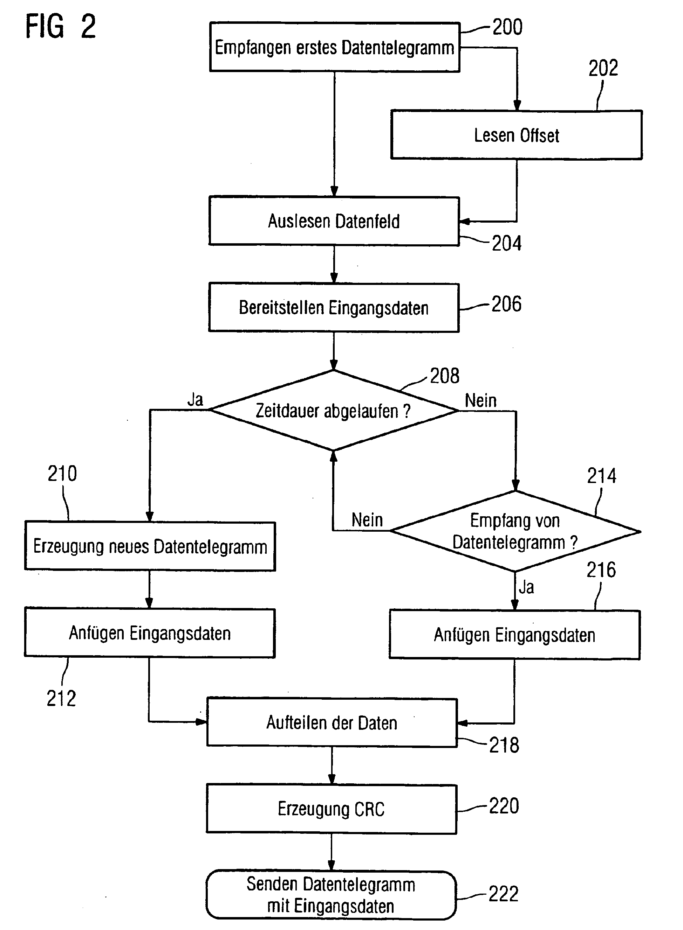

Um nun in beispielhafter Weise die Funktionsweise eines solchen Bussystems mit dem erfindungsgemäßen Verfahren zur Datenübertragung zu illustrieren, sei auf die FIG 2, welche ein Flussdiagramm eines erfindungsgemäßen Verfahrens zur Datenübertragung zeigt, Bezug genommen. Wie in der FIG 2 gezeigt, wird in Schritt 200 von einem Busteilnehmer ein erstes Datentelegramm empfangen. In einem optionalen Schritt 202 wird ein Offset aus einer Tabelle des Bussystems 102 ausgelesen, um damit aus einer Vielzahl von Datenfeldern jenes Datenfeld herauszufiltern, welches für den vorliegenden Busteilnehmer vorgesehen ist. Alternativ dazu kann, im Falle dessen, dass die einzelnen Datenfelder in spezieller Weise für einen Busteilnehmer vorbestimmt gekennzeichnet sind, in Schritt 204 direkt ein Auslesen des entsprechenden Datenfeldes durch den Busteilnehmer vorgenommen werden.

Daraufhin wird in Schritt 206 eine Bereitstellung von Eingangsdaten vorgenommen. Dabei kann es sich entweder um eine konkrete Anfrage des Busteilnehmers an eine Automatisierungskomponente handeln, die daraufhin eine entsprechende Antwort in Form von Eingangsdaten erzeugt, oder es kann sich hierbei um den direkten Zugriff des Busteilnehmers auf einen vorbestimmten Speicherbereich handeln, in welchem bereits in vordefinierter Weise Eingangsdaten von der Automatisierungskomponente abgelegt und zur Verfügung gestellt wurden.

Nach Empfang bzw. Bereitstellen der Eingangsdaten in Schritt 206 wird in Schritt 208 geprüft, ob eine vorbestimmte Zeitdauer abgelaufen ist oder nicht. So könnte es z. B. möglich sein, dass aufgrund eines aufwändigen Bereitstellens von Eingangsdaten in Schritt 206 eine vorbestimmte Zeitdauer bereits abgelaufen ist, so dass daraufhin in Schritt 210 durch den Busteilnehmer ein neues Datentelegramm erzeugt wird. An dieses neue Datentelegramm wird daraufhin in Schritt 212 ein Anfügen der Eingangsdaten vorgenommen, welche in Schritt 206 bereitgestellt wurden.

Ergibt die Auswertung in Schritt 208, dass die entsprechende Zeitdauer noch nicht abgelaufen ist, wird daraufhin in Schritt 214 überprüft, ob von einem weiteren Busteilnehmer ein Datentelegramm empfangen wurde. Wurde ein solches Datentelegramm nicht empfangen, wird weiter mit Schritt 208 fortgefahren. Ergibt Schritt 214, dass von einem weiteren Busteilnehmer ein Datentelegramm empfangen wurde, so werden in Schritt 216 die in Schritt 206 bereitgestellten Eingangsdaten an das empfangene Datentelegramm angefügt.

Entweder nach Schritt 212 oder nach Schritt 216 erfolgt dann ein Aufteilen der Daten in Schritt 218 auf ein oder mehrere weitere Datentelegramme, wenn die Gesamtgröße des Datentelegramms zusammen mit den Eingangsdaten eine vordefinierte Telegrammgröße (Protokolllänge) überschreitet. Nach Schritt 218 wird in Schritt 220 eine Prüfsumme erzeugt, woraufhin in Schritt 222 das Datentelegramm mit den Eingangsdaten und der Prüfsumme die Steuereinheit übermittelt wird.

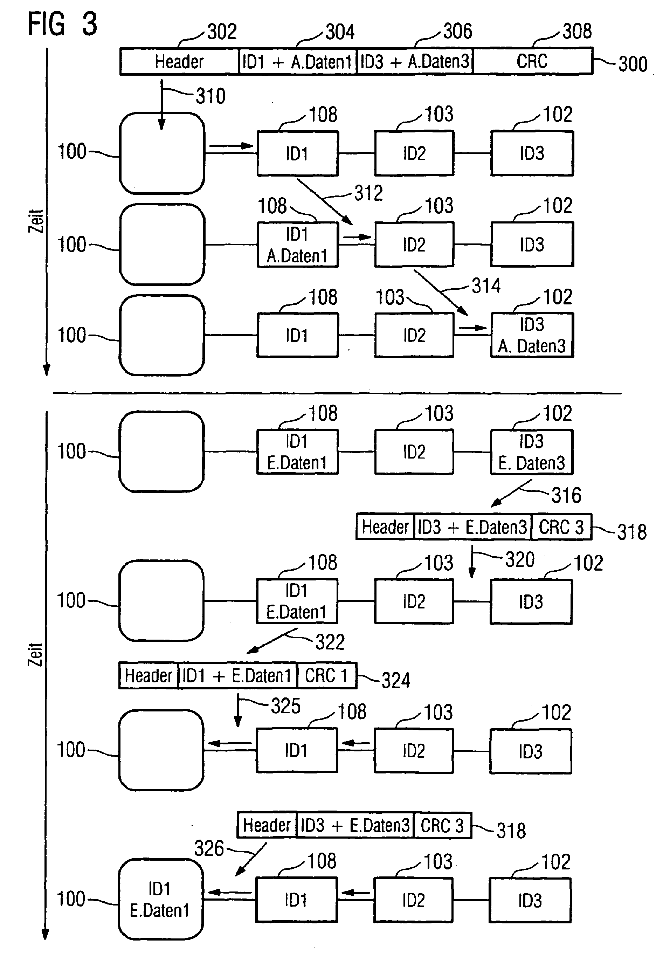

Die FIG 3 zeigt ein Flussdiagramm eines erfindungsgemäßen Verfahrens zur Datenübertragung. So wird ein erstes Datentelegramm 300 in Schritt 310 durch die Steuereinheit 100 zur Verfügung gestellt. Das erste Datentelegramm enthält dabei einen Header 302, ein erstes Datenfeld 304 und ein zweites Datenfeld 306. Ferner enthält das erste Datentelegramm eine Prüfsumme (CRC) 308. Das erste Datenfeld enthält im vorliegenden Beispiel eine Kennung (ID1) und entsprechende zur Kennung zugehörige Ausgangsdaten 1. Das Datenfeld 306 enthält eine weitere Kennung (ID3) und zu der Kennung ID3 zugehörige Ausgangsdaten 3.

Nach Bereitstellen des ersten Datentelegramms in Schritt 310 wird das Datentelegramm von der Steuereinheit 100 an den Busteilnehmer 108 mit der Kennung ID1 geschickt. Der Busteilnehmer 108 liest nun aus dem ersten Datentelegramm das für ihn vorgesehene Datenfeld mit der Kennung ID1 aus, um daraufhin in Schritt 312 das erste Datentelegramm an den nächsten Busteilnehmer in der seriellen Kette von Busteilnehmern weiterzuleiten. Der nächste Busteilnehmer ist in diesem Fall der Busteilnehmer 103 mit der Kennung ID2. Da jedoch die Kennung ID2 in dem ersten Datentelegramm nicht vorkommt, leitet der Busteilnehmer 103 in Schritt 314 unmittelbar das Datentelegramm 300 an den nächsten Busteilnehmer in der Busteilnehmerkette weiter. Im vorliegenden Fall handelt es sich hier um den Busteilnehmer 102 mit der Kennung ID3. Analog zum Busteilnehmer 108 liest nun der Busteilnehmer 102 das Datenfeld mit der Kennung ID3 aus dem ersten Datentelegramm aus.

Im Folgenden wird davon ausgegangen, dass nun die Busteilnehmer 108 und 102 jeweilige Eingangsdaten 1 bzw. Eingangsdaten 3 als Antwort auf die empfangenen Ausgangsdaten 1 bzw. Ausgangsdaten 3 zur Verfügung stehen haben. Der Busteilnehmer 102 als letzter in der Kette der Busteilnehmer erzeugt nun in Schritt 316 ein zweites Datentelegramm 318, wobei das zweite Datentelegramm 318 die Kennung ID3 des Busteilnehmers 102 sowie dessen Eingangsdaten 3 enthält. Ferner enthält das zweite Datentelegramm einen Header, welcher vorzugsweise dem Header 302 entspricht, welcher zuvor von der Steuereinheit 100 empfangen wurde. Außerdem enthält das zweite Datentelegramm 318 eine Prüfsumme (CRC3), welche die Unversehrtheit des zweiten Datentelegramms (aufgrund von fehlerhafter Übermittlung usw.) kennzeichnet. Das so erzeugte zweite Datentelegramm 318 wird in Schritt 320 in umgekehrter Richtung wie zuvor das erste Datentelegramm 300 empfangen wurde, an den nächsten Busteilnehmer 103 weitergeleitet.

In der Zwischenzeit hat jedoch der Busteilnehmer 108 aufgrund einer hohen Datenpriorität bzw. einer abgelaufenen Zeit für sich selbständig bestimmt, dass er die ihm vorliegenden Eingangsdaten 1 direkt an die Steuereinheit 100 senden möchte. Aus diesem Grund erzeugt in Schritt 322 der Busteilnehmer 108 ein drittes Datentelegramm 324, was neben einem Header und der Kennung ID1 des Busteilnehmers 108 auch eine entsprechende Prüfsumme (CRC1) für das dritte Datentelegramm 324 enthält.

Das dritte Datentelegramm 324 wird nun in Schritt 325 von dem Busteilnehmer 108 direkt an die Steuereinheit 100 gesendet. In der Zwischenzeit hat der Busteilnehmer 103 das zweite Datentelegramm 318 in Richtung der Steuereinheit 100 weitergeleitet, da der Busteilnehmer 103 an das besagte Datentelegramm 318 aufgrund nicht vorhandener Eingangsdaten keine weiteren Daten angefügt hat.

Schließlich wird in Schritt 326 auch das zweite Datentelegramm 318 von dem Busteilnehmer 108 an die Steuereinheit 100 weitergeleitet, welche in der Zwischenzeit bereits das dritte Datentelegramm 324 mit den Eingangsdaten 1 empfangen hat. Auch hier wird ähnlich zum Fall des Busteilnehmers 103 bei Schritt 326 keine Veränderung des zweiten Datentelegramms 318 durch den Busteilnehmer 108 vorgenommen, da der Busteilnehmer 108 keine anzuhängenden Eingangsdaten mehr vorliegen hat.

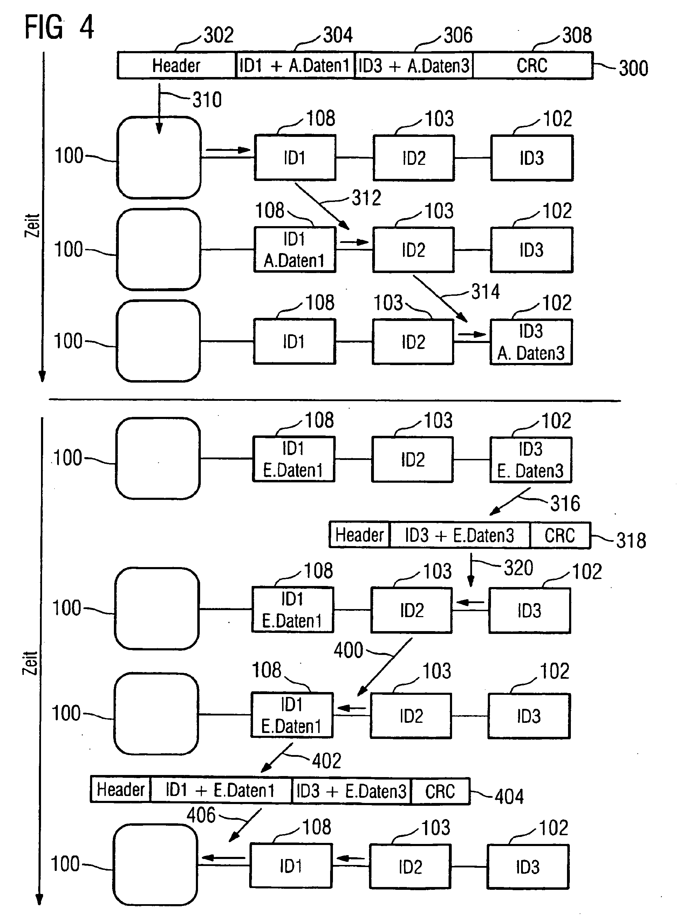

Die FIG 4 zeigt ein weiteres Flussdiagramm eines erfindungsgemäßen Verfahrens zur Datenübertragung. Hier wird davon ausgegangen, dass die Übermittlung des ersten Datentelegramms von der Steuereinheit 100 zu den Busteilnehmern 108, 103 und 102 der Übermittlung entspricht, wie sie in der FIG 3 gezeigt ist. Zu der FIG 3 unterscheidet sich jedoch nun die Art der Antwort der jeweiligen Busteilnehmer auf den Erhalt des ersten Datentelegramms. Ähnlich wie in der FIG 3 wird in Schritt 316 als Antwort auf den Empfang des ersten Datentelegramms 300 ein zweites Datentelegramm 318 durch den Busteilnehmer 102 erzeugt, wobei das zweite Datentelegramm 318 einen Header, die Eingangsdaten 3 des Busteilnehmers 102 zusammen mit dessen Kennung und einer Prüfsumme enthält.

Das zweite Datentelegramm 318 wird nun in Schritt 320 von dem Busteilnehmer 102 an den Busteilnehmer 103 weitergeleitet. Da dieser Busteilnehmer 103 keine Eingangsdaten zur Verfügung stehen hat, leitet dieser in Schritt 400 unmittelbar das empfangene zweite Datentelegramm an den Busteilnehmer 108 weiter. Im Unterschied zu der FIG 3 ist im Beispiel der FIG 4 kein Zeitkriterium erfüllt, wonach der Busteilnehmer 108 individuell für sich eine Antwort in Form eines dritten Datentelegramms an die Steuereinheit 100 hätte senden müssen. Aus diesem Grund liegen zum Zeitpunkt des Schritts 400 am Busteilnehmer 108 weiterhin die Eingangsdaten 1 vor. Aus diesem Grund ist nun der Busteilnehmer 108 in der Lage, an das empfangene zweite Datentelegramm 318 in Schritt 402 seine Eingangsdaten 1 zusammen mit der Kennung ID1 des Busteilnehmers 108 anzuhängen. Es spielt dabei keine Rolle, ob die Daten am Anfang oder Ende des zweiten Datentelegramms 318 angefügt werden. Insgesamt resultiert daraus ein neues Datentelegramm 404, welches auch eine entsprechende neue Prüfsumme (CRC) enthält, die die Aufnahme der zusätzlichen Eingangsdaten 1 berücksichtigt. Schließlich wird in Schritt 406 das neue Datentelegramm 404 von dem Busteilnehmer 108 an die Steuereinheit 100 weitergeleitet, welches das empfangene Datentelegramm schließlich auswertet.

Es sei hier noch angemerkt, dass die Anbindung der Busteilnehmer an entsprechende Systeme, welche Eingangsdaten zur Verfügung stellen, sich nicht nur auf Automatisierungskomponenten beschränkt. Es kann sich hierbei auch insbesondere um eine Steuereinheit oder ähnliches handeln.

Ferner sei noch angemerkt, dass mit erfindungsgemäßen Verfahren zur Datenübertragung auch eine synchronisierte Datenübertragung zwischen den einzelnen Busteilnehmern realisierbar ist. In diesem Fall weisen die Busteilnehmer eine gemeinsame Zeitbasis auf.

Das erfindungsgemäße Verfahren zur Datenübertragung eignet sich insbesondere zur Anbindung an einen Systembus wie z. B. Profibus oder PROFINET.

## Patentansprüche

1. Verfahren zur Datenübertragung für ein serielles Bussystem, wobei das Bussystem eine Steuereinheit (100) und Busteilnehmer (102; 103; 105; 106; 108) aufweist, mit den folgenden Schritten:
- Empfangen eines ersten Datentelegramms (300) durch einen Busteilnehmer (102; 103; 105; 106; 108) von der Steuereinheit (100), wobei das Datentelegramm zumindest ein Datenfeld (304; 306) aufweist, wobei in dem Datenfeld (304; 306) Ausgangsdaten enthalten sind,
- Auslesen des für den Busteilnehmer (102; 103; 105; 106; 108) vorgesehenen Datenfeldes (304; 306) aus dem ersten Datentelegramm,
- Bereitstellen von Eingangsdaten als Antwort auf das ausgelesene Datenfeld (304; 306), **gekennzeichnet durch**
- Überprüfen ob ein vordefiniertes Kriterium erfüllt ist,
wobei
a) bei Erfüllung des Kriteriums ein zweites Datentelegramm neu erzeugt wird und die Eingangsdaten an das zweite Datentelegramm angefügt werden die Eingangsdaten mittels des zweiten Datentelegramms unabhängig von anderen Busteilnehmern an die Steuereinheit gesendet werden und
b) bei Nicht-Erfüllung des Kriteriums die Eingangsdaten an ein zuvor von einem weiteren der Busteilnehmer empfangenes Datentelegramm angefügt werden und damit ein zweites Datentelegramm (318; 404) erzeugt wird, und die Eingangsdaten mittels des zweiten Datentelegramms (318; 404) an die Steuereinheit (100) gesendet werden.

2. Verfahren nach Anspruch 1 **dadurch gekennzeichnet, dass** es sich bei dem Kriterium um eine Verzögerungszeit ab Empfang des ersten Datentelegramms (300) handelt.

3. Verfahren nach Anspruch 1**, dadurch gekennzeichnet, dass** es sich bei dem Kriterium um die Dringlichkeit der zu sendenden Eingangsdaten handelt.

4. Verfahren nach einem der vorigen Ansprüche, **dadurch gekennzeichnet, dass** jeder der Busteilnehmer (102; 103; 105; 106; 108) eine eindeutige Kennung (ID1; ID2; ID3) aufweist, wobei an das zweite Datentelegramm die Kennung (ID1; ID2; ID3) des Busteilnehmers zusammen mit den Eingangsdaten angefügt wird.

5. Verfahren nach einem der vorigen Ansprüche, ferner mit dem Schritten:
- Prüfen der Gesamtgröße des zweiten Datentelegramms (318; 404) und der Eingangsdaten, wobei das Prüfen vor Anhängen der Eingangsdaten an das zweite Datentelegramm erfolgt,
- Aufteilen der Eingangsdaten auf das zweite Datentelegramm und/oder zumindest ein weiteres Datentelegramm, wenn die Gesamtgröße des zweiten Datentelegramms (318; 404) und der Eingangsdaten eine vorgegebene Maximalgröße überschreitet.

6. Verfahren nach einem der vorigen Ansprüche, **dadurch gekennzeichnet , dass** an das zweite Datentelegramm Prüfungsdaten zusammen mit den Eingangsdaten angefügt werden.

7. Verfahren nach Anspruch 6, **dadurch gekennzeichnet, dass** im Falle fehlerhafter Prüfungsdaten des von einem der Busteilnehmer empfangenen zweiten Datentelegramms (318; 404) nach Anfügen der Eingangsdaten an das zweite Datentelegramm die Prüfungsdaten verfälscht werden.

8. Verfahren nach einem der vorigen Ansprüche, **dadurch gekennzeichnet, dass** sich die Ausgaberichtung der mittels des zweiten Datentelegramms (318; 404) gesendeten Eingangsdaten von der Eingaberichtung des ersten Datentelegramms (300) unterscheidet.

9. Verfahren nach einem der vorigen Ansprüche, ferner mit den Schritt des Lesens einer beim Busteilnehmer (102; 103; 105; 106; 108) gespeicherten Offset-Information, wobei die Offset-Information die Position des für den Busteilnehmer (102; 103; 105; 106; 108) vorgesehenen Datenfeldes (304; 306) in dem ersten Datentelegramm (300) angibt.

10. Busteilnehmer (102; 103; 105; 106; 108) für ein serielles Bussystem, wobei das Bussystem eine Steuereinheit (100) aufweist, mit
- Mitteln zum Empfangen eines ersten Datentelegramms (300) durch den Busteilnehmer (102; 103; 105; 106; 108) von der Steuereinheit (100), **dadurch gekennzeichnet, dass** das Datentelegramm zumindest ein Datenfeld (304; 306) aufweist, wobei in dem Datenfeld (304; 306) Ausgangsdaten enthalten sind,
- Mitteln zum Auslesen des für den Busteilnehmer (102; 103; 105; 106; 108) vorgesehenen Datenfeld (304; 306)es aus dem ersten Datentelegramm,
- Mitteln zum Bereitstellen von Eingangsdaten als Antwort auf das ausgelesene Datenfeld (304; 306),
- Mitteln zum Erzeugen eines neuen Datentelegramms,
- Mitteln zum Anfügen der Eingangsdaten an ein Datentelegramm, **gekennzeichnet durch**
- Mitteln zum Überprüfen ob ein vordefiniertes Kriterium erfüllt ist, wobei
a) bei Erfüllung des Kriteriums ein zweites Datentelegramm neu erzeugt wird und die Eingangsdaten an das zweite Datentelegramm angefügt werden die Eingangsdaten mittels des zweiten Datentelegramms unabhängig von anderen Busteilnehmern an die Steuereinheit gesendet werden; und
b) bei Nicht-Erfüllung des Kriteriums die Eingangsdaten an ein zuvor von einem weiteren Busteilnehmer empfangenes Datentelegramm angefügt werden und damit ein zweites Datentelegramm (318; 404) erzeugt wird, und die Eingangsdaten mittels des zweiten Datentelegramms an die Steuereinheit gesendet werden
- Mitteln zum Senden der Eingangsdaten mittels des zweiten Datentelegramms (318; 404) an die Steuereinheit (100).

11. Busteilnehmer nach Anspruch 10, ferner mit Mitteln zum Empfang einer eindeutigen Kennung (ID1; ID2; ID3) und mit Mitteln zum Anfügen der Kennung (ID1; ID2; ID3) des Busteilnehmers (102; 103; 105; 106; 108) zusammen mit den Eingangsdaten an das zweite Datentelegramm.

12. Busteilnehmer nach einem der vorigen Ansprüche 10 oder 11, ferner mit:
- Mitteln zum Prüfen der Gesamtgröße des zweiten Datentelegramms (318; 404) und der Eingangsdaten, wobei das Prüfen vor Anhängen der Eingangsdaten an das zweite Datentelegramm (318; 404) erfolgt,
- Mitteln zum Aufteilen der Eingangsdaten auf das zweite Datentelegramm und/oder zumindest ein weiteres Datentelegramm, wenn die Gesamtgröße des zweiten Datentelegramms (318; 404) und der Eingangsdaten eine vorgegebene Maximalgröße überschreitet.

13. Busteilnehmer (102; 103; 105; 106; 108) nach einem der vorigen Ansprüche 10 bis 12, ferner mit Mitteln zum Bestimmen von Prüfungsdaten (308) und Anfügen der Prüfungsdaten (308) zusammen mit den Eingangsdaten an das zweite Datentelegramm (318; 404).

14. Busteilnehmer (102; 103; 105; 106; 108) nach einem der vorigen Ansprüche 10 bis 13, ferner mit Mitteln zum Lesen einer beim Busteilnehmer (102; 103; 105; 106; 108) gespeicherten Offset-Information, wobei die Offset-Information die Position des für den Busteilnehmer (102; 103; 105; 106; 108) vorgesehenen Datenfeldes (304; 306) in dem ersten Datentelegramm angibt.

15. Busteilnehmer (102; 103; 105; 106; 108) nach einem der vorigen Ansprüche 10 bis 14, ferner mit Mitteln zum Empfangen der Offset-Information von der Steuereinheit (100).

16. Netzwerk mit einem seriellen Bussystem, **dadurch gekennzeichnet, dass** das Bussystem eine Steuereinheit (100) und zumindest einen Busteilnehmer (102; 103; 105; 106; 108) nach einem der vorigen Ansprüche 10 bis 15 aufweist.

17. Netzwerk nach Anspruch 16, ferner mit zumindest einem Verteilermodul (104), **dadurch gekennzeichnet, dass** das Verteilermodul (104) zum Anschluss mehrerer Busteilnehmer (102; 103; 105; 106; 108) ausgebildet ist, wobei das Verteilermodul (104) zum Verteilen von Datentelegrammen an die angeschlossenen Busteilnehmer (102; 103; 105; 106; 108) ausgebildet ist.

18. Netzwerk nach Anspruch 17, **dadurch gekennzeichnet, dass** durch das Verteilermodul (104) von den Busteilnehmern (102; 103; 105; 106; 108) empfangene Datentelegramme ausschließlich an die Steuereinheit (100) weitergeleitet werden wenn die Datentelegramme für die Steuereinheit (100) bestimmt sind.

19. Computer Programm Produkt mit von einem Computer ausführbaren Instruktionen zur Durchführung der Verfahrensschritte 1 bis 9.

## Claims

1. Method for data transmission for a serial bus system,
wherein the bus system has a control unit (100) and bus users (102; 103; 105; 106; 108), comprising the following steps:
- reception of a first data telegram (300) by a bus user (102; 103; 105; 106; 108) from the control unit (100), wherein said data telegram has at least one data field (304; 306), output data being contained in said data field (304; 306),
- readout of the data field (304; 306) intended for the bus users (102; 103; 105; 106; 108) from the first data telegram,
- preparation of input data as a response to the read out data field (304; 306), **characterized by**
- checking whether a predefined criterion is met, wherein
a) if the criterion is met a second data telegram is newly generated and the input data is attached to the second data telegram and the input data is sent to the control unit by means of the second data telegram independently of other bus users
b) if the criterion is not met, the input data is attached to a data telegram previously received from another of the bus users and therefore a second data telegram (318; 404) is generated, and the input data is sent to the control unit (100) by means of the second data telegram (318; 404).

2. Method according to claim 1, **characterised in that** the criterion is a delay time from reception of the first data telegram (300).

3. Method according to claim 1, **characterised in that** the criterion is the urgency of the input data to be transmitted.

4. Method according to one of the preceding claims, **characterised in that** each of the bus users (102; 103; 105; 106; 108) has a unique identifier (ID1; ID2; ID3), the bus user identifier (ID1; ID2; ID3) being attached to the second data telegram together with the input data.

5. Method according to one of the preceding claims, comprising the additional steps:
- checking the total size of the second data telegram (318; 404) and input data, said checking taking place prior to attachment of the input data to the second data telegram,
- splitting the input data between the second data telegram and/or at least one other data telegram if the total size of the second data telegram (318; 404) and input data exceeds a specified maximum size.

6. Method according to one of the preceding claims, **characterised in that** check data is attached to the second data telegram together with the input data.

7. Method according to claim 6, **characterised in that** if the second data telegram (318; 404) received by one of the bus users contains incorrect check data, after attachment of the input data to the second data telegram the check data is corrupted.

8. Method according to one of the preceding claims, **characterised in that** the output direction of the input data transmitted by means of the second data telegram (318; 404) is different from the input direction of the first data telegram (300).

9. Method according to one of the preceding claims, with the additional step of reading offset information stored at the bus user (102; 103; 105; 106; 108), the offset information indicating the position of the data field (304; 306) intended for the bus user (102; 103; 105; 106; 108) in the first data telegram (300).

10. Bus user (102; 103; 105; 106; 108) for a serial bus system,
wherein the bus system has a control unit (100), comprising
- means for reception of a first data telegram (300) by the bus user (102; 103; 105; 106; 108) from the control unit (100), **characterised in that** the data telegram has at least one data field (304; 306), said data field (304; 306) containing output data,
- means of reading out the data field (304; 306) intended for the bus user (102; 103; 105; 106; 108) from the first data telegram,
- means of preparing input data as a response to the data field (304; 306) read out,
- means of generating a new data telegram,
- means of attaching the input data to a data telegram, **characterised by**
- means of checking whether a predefined criterion is met,
wherein
a) if the criterion is met, a second data telegram is newly generated and the input data is attached to the second data telegram and the input data is sent to the control unit by means of the second data telegram independently of other bus users
b) if the criterion is not met, the input data is attached to the data telegram previously received from another bus user, thereby generating a second data telegram (318; 404) and the input data is sent to the control unit by means of the second data telegram
- means of transmitting the input data to the control unit (100) by means of the second data telegram (318; 404).

11. Bus user according to claim 10, additionally with means of receiving a unique identifier (ID1; ID2; ID3) and with means of attaching the identifier (ID1; ID2; ID3) of the bus user (102; 103; 105; 106; 108) together with the input data to the second data telegram.

12. Bus user according to one of the preceding claims 10 or 11, additionally comprising:
- means of checking the total size of the second data telegram (318; 404) and input data, said checking taking place prior to attachment of the input data to the second data telegram (318; 404),
- means of splitting the input data between the second data telegram and/or at least one other data telegram if the total size of the second data telegram (318; 404) and input data exceeds a specified maximum size.

13. Bus user (102; 103; 105; 106; 108) according to one of the preceding claims 10 to 12, additionally with means of determining check data (308) and attaching the check data (308) together with the input data to the second data telegram (318; 404).

14. Bus user (102; 103; 105; 106; 108) according to one of the preceding claims 10 to 13, additionally with means of reading offset information stored at the bus user (102; 103; 105; 106; 108), said offset information indicating the position of the data field (304; 306) intended for the bus user (102; 103; 105; 106; 108) in the first data telegram.

15. Bus user (102; 103; 105; 106; 108) according to one of the preceding claims 10 to 14, additionally with means of receiving the offset information from the control unit (100).

16. Network with a serial bus system, **characterised in that** the bus system has a control unit (100) and at least one bus user (102; 103; 105; 106; 108) according to one of the preceding claims 10 to 15.

17. Network according to claim 16, additionally with at least one distribution module (104), **characterised in that** the distribution module (104) is designed for the connection of a plurality of bus users (102; 103; 105; 106; 108), said distribution module (104) being designed to distribute data telegrams to the connected bus users (102; 103; 105; 106; 108).

18. Network according to claim 17, **characterised in that** data telegrams received by the distribution module (104) from the bus users (102; 103; 105; 106; 108) are only forwarded to the control unit (100) if the data telegrams are intended for the control unit (100).

19. Computer program product with computer executable instructions for carrying out the method steps 1 to 9.

## Revendications

1. Procédé de transmission de données pour un système de bus série, dans lequel le système de bus a une unité ( 100 ) de commande et des participants ( 102, 103, 105, 106, 108 ) de bus, comprenant les stades suivantes :
- la réception d'un premier télégramme ( 300 )de données de l'unité ( 100 ) de commande par le participant ( 102, 103, 105, 106, 108 ) de bus, le télégramme de données ayant au moins un champ ( 304, 306 ) de données, des données de sortie étant contenues dans le champ ( 304, 306 ) de données,
- la lecture dans le premier télégramme de données du champ ( 304, 306 ) de données prévu pour le participant ( 102, 103, 105, 106, 108 ) de bus,
- la préparation de données d'entrée en tant que réponse au champ ( 304, 306 ) de données qui a été lu,
**caractérisée par**
- le contrôle du point de savoir si un critère défini à l'avance est satisfait,
dans lequel
a) si le critère est satisfait, un deuxième télégramme de données est produit à nouveau, et les données d'entrée sont adjointes au deuxième télégramme de données, et les données d'entrée sont envoyées à l'unité de commande indépendamment d'autres participants de bus au moyen du deuxième télégramme de données,
b) si le critère n'est pas satisfait, les données d'entrée sont adjointes à un télégramme de données reçu auparavant par un autre des participants de bus, et un deuxième télégramme ( 318, 404 ) de données est ainsi produit, et les données d'entrée sont envoyées à l'unité ( 100 ) de commande au moyen du deuxième télégramme ( 318, 404 ) de données.

2. Procédé suivant la revendication 1, **caractérisé en ce que** le critère est un temps de retard à partir de la réception du premier télégramme ( 300 ) de données.

3. Procédé suivant la revendication 1, **caractérisé en ce que** le critère est l'urgence des données d'entrée à envoyer.

4. Procédé suivant l'une des revendications précédentes, **caractérisé en ce que** chacun des participants ( 102, 103, 105, 106, 108 ) de bus a une caractéristique ( ID1, ID2, ID3 ) univoque, la caractéristique ( ID1, ID2, ID3 ) du participant de bus étant adjointe ensemble avec les données d'entrée au deuxième télégramme de données.

5. Procédé suivant l'une des revendications précédentes ayant, en outre, les stades :
- la vérification de la grandeur totale du deuxième télégramme ( 318, 404 ) de données et des données d'entrée, la vérification s'effectuant avant d'annexer les données d'entrée au deuxième télégramme de données,
- la répartition des données d'entrée sur le deuxième télégramme de données et/ou sur au moins un autre télégramme de données, si la grandeur totale du deuxième télégramme ( 318, 404 ) de données et des données d'entrée dépasse une grandeur maximum prescrite.

6. Procédé suivant l'une des revendications précédentes, **caractérisé en ce que** des données de vérification sont adjointes ensemble avec les données d'entrée au deuxième télégramme de données.

7. Procédé suivant la revendication 6, **caractérisé en ce que**, dans le cas de données de vérification défectueuses du deuxième télégramme ( 318, 404 ) de données reçu par l'un des participants de bus, les données de vérification sont dénaturées après adjonction des données d'entrée au deuxième télégramme de données.

8. Procédé suivant l'une des revendications précédentes, **caractérisé en ce que** le sens de sortie des données d'entrée à envoyer au moyen du deuxième télégramme ( 318, 404 ) de données se distingue du sens d'entrée du premier télégramme ( 300 ) de données.

9. Procédé suivant l'une des revendications précédentes comprenant, en outre, le stade de la lecture d'une information offset mémorisée chez le participant ( 102, 103, 105, 106, 108 ) de bus, l'information offset indiquant la position dans le premier télégramme de données du champ ( 304, 306 ) de données prévu pour le participant ( 102, 103, 105, 106, 108 ) de bus.

10. participent ( 102, 103, 105, 106, 108 ) de bus pour un système de bus série, dans lequel le système de bus a une unité ( 100 ) de commande, comprenant :
- des moyens de réception d'un premier télégramme ( 300 ) de données de l'unité ( 100 ) de commande par le participant ( 102, 103, 105, 106, 108 ) de bus, **caractérisé en ce que** le télégramme de données a au moins un champ ( 304, 306 ) de données, des données de sortie étant contenues dans le champ ( 304, 306 ) de données,
- des moyens de lecture du champ ( 304, 306 ) de données prévu pour le participant ( 102, 103, 105, 106, 108 ) de bus dans le premier télégramme de données,
- des moyens de préparation de données d'entrée en tant que réponse au champ ( 304, 306 ) de données lu,
- des moyens de production d'un nouveau télégramme de données,
- des moyens d'adjonction des données d'entrée à un télégramme de données, **caractérisé par**
- des moyens de contrôle, si un critère défini est satisfait, dans lequel
a) si le critère est satisfait, un deuxième télégramme de données est produit à nouveau, et les données d'entrée sont adjointes au deuxième télégramme de données, et les données d'entrée sont envoyées à l'unité de commande indépendamment d'autres participants de bus au moyen du deuxième télégramme de données,
b) si le critère n'est pas satisfait, les données d'entrée sont adjointes à un télégramme de données reçu auparavant par un autre des participants de bus, et un deuxième télégramme ( 318, 404 ) de données est ainsi produit, et les données d'entrée sont envoyées à l'unité ( 100 ) de commande au moyen du deuxième télégramme ( 318, 404 ) de données.

11. Participant de bus suivant la revendication 10 comprenant, en outre, des moyens de réception d'une caractéristique ( ID1, ID2, ID3 ) univoque et des moyens d'adjonction de la caractéristique ( ID1, ID2, ID3 ) du participant ( 102, 103, 105, 106, 108 ) de bus ensemble avec les données d'entrée au deuxième télégramme de données.

12. Participant de bus suivant l'une des revendications 10 ou 11 comprenant, en outre :
- des moyens de contrôle de la grandeur totale du deuxième télégramme ( 318, 404 ) de données et des données d'entrée, le contrôle s'effectuant avant d'annexer les données d'entrée sur le deuxième télégramme ( 318, 404 ) de données,
- des moyens de répartition des données d'entrée sur le deuxième télégramme de données et/ou sur au moins un autre télégramme de données, si la dimension totale du deuxième télégramme ( 318, 404 ) de données et des données d'entrée dépasse une grandeur maximum prescrite.

13. Participant ( 102, 103, 105, 106, 108 ) de bus suivant l'une des revendications précédentes 10 à 12 comprenant, en outre, des moyens de détermination des données ( 308 ) de vérification et d'adjonction des données ( 308 ) de vérification ensemble avec les données d'entrée au deuxième télégramme ( 318, 404 ) de données.

14. Participant ( 102, 103, 105, 106, 108 ) de bus suivant l'une des revendications précédentes 10 à 13 comprenant, en outre, des moyens de lecture de l'information offset mémorisée chez le participant ( 102, 103, 105, 106, 108 ) de bus, l'information offset indiquant la position dans le premier télégramme de données du champ ( 304, 306 ) de données prévu pour les participants ( 102, 103, 105, 106, 108 ) de bus.

15. Participant ( 102, 103, 105, 106, 108 ) de bus suivant l'une des revendications précédentes 10 à 14 comprenant, en outre, des moyens de réception de l'information offset par l'unité ( 100 ) de commande.

16. Réseau ayant un système de bus série, **caractérisé en ce que** le système de bus a une unité ( 100 ) de commande et au moins un participant ( 102, 103, 105, 106, 108 ) de bus suivant l'une des revendications 10 à 15 précédentes.

17. Réseau suivant la revendication 16 comprenant, en outre, au moins un module ( 104 ) formant répartiteur, **caractérisé en ce que** le module ( 104 ) formant répartiteur est constitué pour le raccord de plusieurs participants ( 102, 103, 105, 106, 108 ) de bus, le module ( 104 ) formant répartiteur étant constitué pour répartir des télégrammes de données sur les participants ( 102, 103, 105, 106, 108 ) de bus raccordés.

18. Réseau suivant la revendication 17, **caractérisé en ce que** des télégrammes de données reçus du module ( 104 ) formant répartiteur par les participants ( 102, 103, 105, 106, 108 ) de bus sont acheminés exclusivement à l'unité ( 100 ) de commande, si les télégrammes de données sont destinés à l'unité ( 100 ) de commande.

19. Produit de programme informatique payant des instructions pouvant être exécuté par un ordinateur pour la mise en oeuvre des stades 1 à 9 de procédé.
